# EUROPEAN PATENT SPECIFICATION

(11) **EP 2 416 603 B1**
(45) Date of publication and mention of the grant of the patent: **28.01.2015**
(21) Application number: 10290438.0
(22) Date of filing: 03.08.2010
(51) Int. Cl.: H04W 72/04

(54) **Method of operating a base station and base station**
Verfahren zum Betrieb einer Basisstation und Basisstation
Procédé d'opération d'une station de base et station de base

(43) Date of publication of application: 08.02.2012
(73) Proprietor: ALCATEL LUCENT, 92100 Boulogne-Billancourt (FR)
(72) Inventor: Halbauer, Hardy, 76275 Ettlingen (DE); Saur, Stephan, 70567 Stuttgart (DE)
(74) Representative: Wetzel, Emmanuelle

(56) References cited:
- EP-A2- 1 748 664
- EP-A2- 2 043 402
- US-A1- 2004 229 651
- US-A1- 2010 159 930
- US-B1- 6 381 462

## Description

### Field of the Invention

The invention relates to a method of operating a base station for a cellular communications network. The invention further relates to a base station for a cellular communications network.

### Background

Conventional base stations for cellular communications networks comprise antenna systems having one or more antennas which either have a fixed beam pattern or which enable an adjustment of a beam pattern in a horizontal direction.

There is a need to provide a more sophisticated base station and method of operating a base station which offer increased flexibility regarding the operational characteristics of the base station.

US 2004/0229651 A1 discloses an antenna arrangement and a method associated with such arrangement including at least two antennas for providing radio coverage to a plurality of user equipment in a predetermined area of a mobile communications network.

US 6,381,462 B1 discloses a radio local loop system which uses an improved dynamic channel selection scheme whereby the fixed subscriber units can automatically select the available traffic channel that exhibits the best signal quality characteristics for establishing a connection.

EP 1 748 664 A2 discloses a wireless control apparatus which forms and controls an area of a base station according to an antenna pattern.

US 2010/0159930 A1 discloses a base station and method for vertical tilt antenna beam sweeping.

### Summary

According to the present invention, regarding the above mentioned method of operating a base station, this object is achieved by the method of claim 1.

I.e., the inventive principle proposes to use different tilt angle values for different radio resources managed by said base station.

For instance, according to a preferred embodiment, specific subframes of a data transmission are assigned to different values of the tilt angle, i.e., different subframes of an ongoing data transmission are transmitted by the base station using different tilt angles for respective subframes. For instance, a sequence of subframes as known from the LTE communications standard may be assigned different tilt angles so that subsequent subframes, each of which may e.g. have a length of 1 ms (millisecond), make use of different tilt angles.

According to a further preferred embodiment, specific frequency bands and/or carrier frequencies are assigned to different values of the tilt angle. That is, the base station may determine to transmit signals scheduled to specific frequency bands and/or subbands with one or more specific tilt angles. It is also possible to assign various carrier frequencies to different tilt angles each. Of course, according to a further embodiment, a combination of the afore mentioned methods of assigning different tilt angles to various subframes, frequency bands, carrier frequencies and possibly also other radio transmission resources is also possible.

Generally, according to an example, the base station may be configured to perform some kind of optimization algorithm in order to schedule the different resources (subframes, frequency bands, carrier frequencies, ..) to the available tilt angles that can be realized with the antenna system.

According to a further preferred embodiment, the assignment of radio resources and/or terminals associated with said radio resources to a specific value for the tilt angle is performed depending on at least one of: a specific rule, feedback information provided by said terminal, the distance between the base station and the terminal, scheduling information of neighboring base stations.

According to a simple example, a predetermined specific rule may be employed for assigning radio resources to the available tilt angles. For instance, subsequent subframes of an LTE-transmission may alternately be assigned to different available tilt angles. That is, if a maximum of two different tilt angles is available with a specific antenna system, every second subframe is transmitted using the same of said two available tilt angles.

Of course, other patterns can also be realized.

A further advantageous variant, which relies on feedback information provided by said terminal to the base station for associating radio resources to a specific value for the tilt angle, advantageously enables to optimize the data transmission from the base station to the terminal and vice versa. Preferably, the feedback information enables the base station to determine a quality of data transmission as can be measured by the mobile terminal in relation to a specific tilt angle used by the base station. That is, with this embodiment, the base station comprises information characterizing transmission quality depending on the used tilt angle.

Moreover, it is also possible to consider a distance between the base station and a terminal for assigning radio resources to a specific value of the tilt angle.

It is also possible that scheduling information of neighboring base stations is considered by a base station when associating radio resources with the available tilt angles. Thus, neighboring base stations can operate in a coordinated manner regarding the setting of their tilt angles leading to the reduced degree of interference.

According to a further preferred embodiment, said feedback information comprises at least one of: information characterizing a quality of transmission between the base station and the mobile terminal such as e.g. channel quality indication (CQI) data as used by the LTE standard or precoding matrix index (PMI) information such as also used by the LTE standard. From this type of feedback information, the base station can reliably judge whether assigning specific tilt angles yields improved results regarding transmission quality.

According to a further embodiment, the base station transmits information indicative of a selected tilt angle to said terminal. I.e., the terminal is notified of which tilt angle has been used by the base station for a data transmission to the terminal. Such information may e.g. be comprised in an additional control field which e.g. comprises some bits for representing a specific one of the possible tilt value angles. I.e., for two possible tilt angles, only one bit is required in the downlink for performing a corresponding "tilt angle signaling" to the terminal. This advantageously enables the terminal to combine transmission quality information as obtained by the terminal with the information indicative of the selected tilt angle. Thus, the terminal can simply forward the received tilt angle signaling information together with locally determined transmission quality information to the base station without being required to determine which tilt angle has been used by the base station for the respective data transmission.

According to a further embodiment, a specific value for said tilt angle is set by electronically controlling the beam pattern of said antenna system. According to this embodiment, the antenna system has an electronically controllable beam pattern, a tilt angle of which may be controlled.

According to a further preferred embodiment, a specific value of said tilt angle is set by providing different antennas each of which has a specific tilt angle, which may particularly be a fixed tilt angle, selecting one of the different antennas depending on a desired tilt angle to be set, and transmitting data via said selected antenna. I.e., in this embodiment, conventional antennas having a fixed tilt angle may be used. For achieving a variety of different tilt angles, a respective number (i.e., two or more) of antennas having different fixed tilt angles must be provided and selected during operation of the base station depending on the desired tilt angle.

A further solution to the object of the present invention is given by a base station according to claim 9.

Further advantageous embodiments of the invention are given in the dependent claims.

### Brief Description of the Figures

Further features, aspects and advantages of the present invention are given in the following detailed description with reference to the drawings in which:
- Figure 1: depicts a simplified block diagram of a base station according to an embodiment,
- Figure 2: depicts a simplified block diagram of an antenna system of a base station according to a further embodiment,
- Figure 3: depicts a simplified flow-chart of a method of operating a base station according to an embodiment, and
- Figure 4: depicts an exemplarysequence of subframes and associated tilt angles.

### Description of the Embodiments

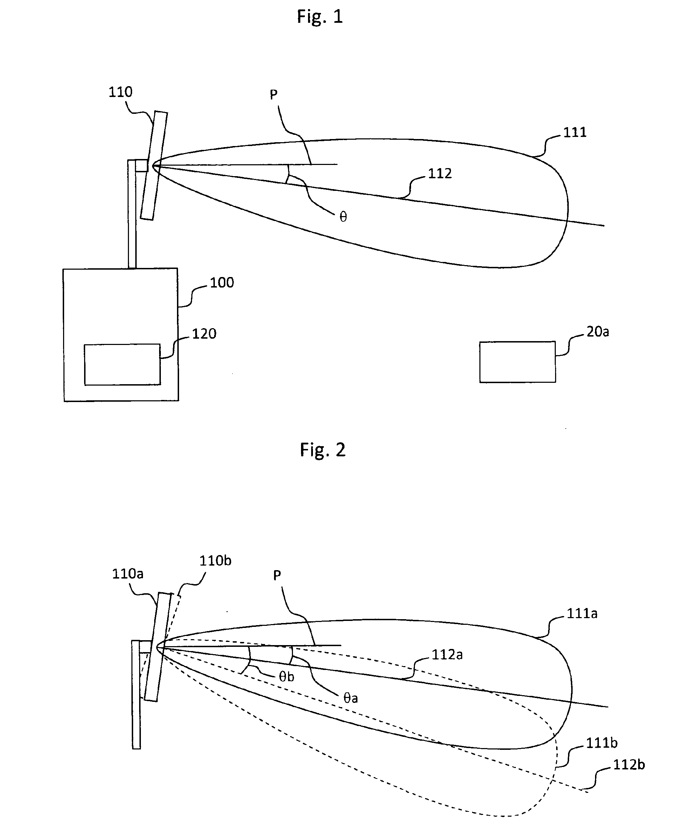

Figure 1 depicts a simplified block diagram of a base station 100 of a cellular communications network. The base station 100 may serve a number of terminals 20a such as mobile user terminals by maintaining respective data communication sessions in a per se known manner. For instance, the base station 100 may operate according to at least one of the following standards: GSM (Global System for Mobile Communications), UMTS (Universal Mobile Telecommunications System), LTE (Long Term Evolution) / LTE Advanced, WiMax (Worldwide Interoperability for Microwave Access), WLAN (Wireless Local Area Network).

The base station 100 comprises an antenna system 110, a characteristic beam pattern of which is symbolized by the shape 111. According to an embodiment, the antenna system 110 may be electronically controlled to reconfigure its beam pattern 111 or at least a direction of the main lobe of beam pattern 111 in which the main lobe's axis 112 extends. I.e., the tilt angle θ of the antenna system 110, more precisely of its main lobe 111, which - as can be gathered from Figure 1 - is defined as the angle between the main lobe's axis 112 and a virtual plane P that is parallel to ground, can be electronically controlled. This is e.g. accomplished by the processing means 120 which also control the basic operation of the base station 100 in a per se known manner. Moreover, the processing means 120 may also be configured to perform the method according to the embodiments explained below with reference to the further Figures.

According to a further embodiment, the base station 100 may comprise an antenna system a beam pattern of which cannot be controlled electronically. Such a system is depicted by Figure 2. The antenna system of Figure 2 comprises two different antennas 110a, 110b, each of which is mounted so as to have a specific, preferably fixed, tilt angle with respect to ground plane P.

Presently, the first antenna 110a has a fixed tilt angle θa. Consequently, the main lobe 111a of its radiation pattern has a first direction 112a. The second antenna 110b has a fixed tilt angle θb, which is different from the tilt angle θa of the first antenna 110a. Consequently, the main lobe 112a of its radiation pattern has a second direction 112b.

With the antenna system depicted by Figure 2, tilt angle control can be performed as follows: Since there are two different antennas having different (fixed) tilt angles θa, θb, in order to set a specific tilt angle, the base station 100 (Figure 1) or its processing means 120, respectively, determine which tilt angle to use, and after that, the antenna having the determined tilt angle is selected and used for data transmission, e.g. to the terminal 20a. Obviously, the number of different tilt angles to be realised with the system according to Figure 2 depends on the overall number of antennas 110a, 110b having different tilt angles.

A combination of an electronically controllable antenna system 110 (Figure 1) with the technique as according to Figure 2 is also possible.

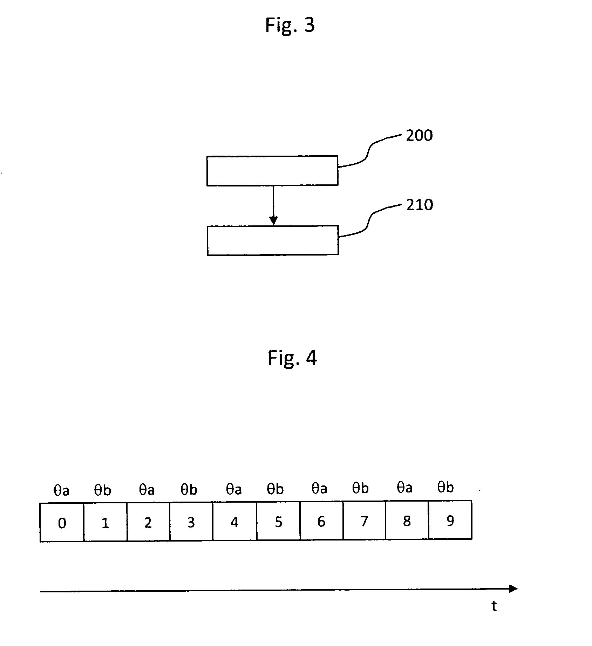

To offer increased flexibility regarding the operational characteristics of the base station 100, the method explained below with respect to the flow-chart of Figure 3 is performed.

In a first step 200, at least one radio resource used for data transmission to and/or from at least one terminal 20a (Figure 1) is associated with a specific value for the tilt angle θ. I.e., the base station 100 selects a specific tilt angle for a data transmission that can be characterized by using a specific carrier frequency or some other radio resource as defined by the respective communications standard employed by the base station. In step 210, the base station 100 performs a data transmission using the previously selected specific tilt angle.

For instance, according to a preferred embodiment, specific subframes of a data transmission are assigned to different values of the tilt angle, i.e., different subframes of an ongoing data transmission are transmitted by the base station 100 using different tilt angles for respective subframes. For instance, a sequence of subframes as known from the LTE communications standard may be assigned different tilt angles so that subsequent subframes, each of which may e.g. have a length of 1 ms (millisecond), make use of different tilt angles. Figure 4 shows a sequence of consecutive subframes 0, .., 9 of an LTE data transmission of said base station 100 along a time axis t. As can also be gathered from Figure 4, the odd-numbered subframes 1, 3, .. are associated with specific tilt angle θb, while the even-numbered subframes 0, 2, .. are associated with the other possible tilt angle θa.

According to a further preferred embodiment, specific frequency bands and/or carrier frequencies are assigned to different values of the tilt angle. That is, the base station 100 may determine to transmit signals scheduled to specific frequency bands with one or more specific tilt angles. It is also possible to assign various carrier frequencies to different tilt angles each. Of course, according to a further embodiment, a combination of the afore mentioned methods of assigning different tilt angles to various subframes, frequency bands, carrier frequencies and possibly also other radio transmission resources defined by the communications standard employed by base station 100 is also possible.

Generally, according to a further embodiment, the base station 100 may be configured to perform an optimization algorithm in order to schedule the different resources (subframes, frequency bands, carrier frequencies, ..) to the available tilt angles θa, θb that can be realized with the antenna system 110.

According to a further preferred embodiment, the assignment of radio resources and/or terminals 20a associated with said radio resources to a specific value θa, θb for the tilt angle θ is performed depending on at least one of: a specific rule, feedback information provided by said terminal 20a, the distance between the base station 100 and the terminal 20a, scheduling information of neighboring base stations (not shown).

According to an embodiment, a predetermined specific rule may be employed for assigning radio resources to the available tilt angles θa, θb. For instance, as already explained above with reference to Figure 4, subsequent subframes of an LTE transmission may alternately be assigned to different available tilt angles θa, θb. That is, if a maximum of two different tilt angles θa, θb is available with a specific antenna system 110, every second subframe is transmitted using the same of said two available tilt angles.

Of course, other patterns can also be realized.

A further advantageous variant, which relies on feedback information provided by said terminal 20a to the base station 100 for associating radio resources to a specific value for the tilt angle, advantageously enables to optimize the data transmission from the base station 100 to the terminal 20a and vice versa. Preferably, the feedback information enables the base station 100 to determine a quality of data transmission as can be measured by the mobile terminal 20a in relation to a specific tilt angle used by the base station 100. That is, with this embodiment, the base station 100 comprises information characterizing transmission quality depending on the used tilt angle.

Moreover, it is also possible to consider a distance between the base station 100 and the terminal 20a for assigning radio resources to a specific value of the tilt angle.

It is also possible that scheduling information of neighboring base stations is considered by the base station 100 when associating radio resources with the available tilt angles θa, θb. Thus, neighboring base stations can operate in a coordinated manner regarding the setting of their tilt angles leading to the reduced degree of interference.

According to a further preferred embodiment, said feedback information comprises at least one of: information characterizing a quality of transmission between the base station 100 and the mobile terminal 20a such as e.g. channel quality indication (CQI) data as used by the LTE standard or precoding matrix index (PMI) information such as also used by the LTE standard. From this type of feedback information, the base station 100 can reliably judge whether assigning specific tilt angles θa, θb yields improved results regarding transmission quality.

According to a further embodiment, said feedback information comprises information associating a quality of transmission between the base station 100 and said mobile terminal 20a with the specific tilt angle value θa, θb used for said transmission thus leaving no doubt which specific tilt angle effected a specific quality of transmission.

According to a further embodiment, the base station 100 transmits information indicative of a selected tilt angle θa, θb to said terminal 20a. I.e., the terminal 20a is notified of which tilt angle has been used by the base station 100 for a specific data transmission to the terminal 20a. Such information may e.g. be comprised in an additional control field which e.g. comprises some bits for representing a specific one of the possible tilt value angles θa, θb. I.e., for two possible tilt angles θa, θb, only one bit is required in the downlink for performing a corresponding "tilt angle signaling" to the terminal 20a.

This advantageously enables the terminal 20a to combine transmission quality information as obtained by the terminal with the information indicative of the selected tilt angle θa, θb as delivered by the base station 100. Thus, the terminal 20a can simply forward the received tilt angle signaling information together with its locally determined transmission quality information to the base station 100 without being required to determine itself which tilt angle has been used by the base station 100 for the respective data transmission.

According to a further embodiment, the base station 100, which may also be referred to as eNB, evolved Node B, in the context of the LTE communications standard, uses different downtilts, i.e. tilt angles, for specific time intervals, e.g. an LTE subframe, for the downlink (DL) transmission. The assignment of the downtilts to the subframes may be done according to a specific rule or order, so that each downtilt is used from time to time. Preferably, according to a further embodiment, the terminal 20a measures the Precoding Matrix Index (PMI) and the Channel Quality Indication (CQI) from the common pilots within each subframe and reports these values to the eNB 100. In addition, to capture a feedback delay which is due to signal propagation effects and processing delays within the components 20a, 100, information on the subframe related to the reporting information (i.e., feedback information) is transmitted to the eNB 100.

From this information, the eNB 100 advantageously can derive the best suited downtilt angle to serve a specific terminal 20a, e.g. by comparing the fed back CQI and/or PMI information.

A scheduler of the eNB 100, which may e.g. be implemented by the processing means 120, uses this information to schedule the DL (downlink) transmissions of each user / terminal 20a in subframes which are dedicated to the best suited downtilt angle.

According to a further embodiment, within each subframe the eNB 100 sends control information indicating the used downtilt angle. The terminal 20a decodes this information and sends it back together with the CQI/PMI information derived from this subframe. So the eNB 100 knows the relation of used downtilt and the corresponding feedback reporting.

According to a further embodiment, a combination of the principles of the above explained embodiments with the technique of coordinated scheduling is also feasible: If also the best companion and/or worst companion PMIs of neighbour base stations (not shown) are measured and the relation to the measurement subframe/used downtilt is known, the schedulers of the base station 100 and its neighbours have all information needed to assign the available resources in an optimized way. The downtilt information thus adds an additional degree of freedom to existing scheduling algorithms.

According to a further embodiment, the base station 100 is equipped with an antenna system 110 realizing a certain number of discrete tilt angles ("downtilts"), e.g. two different downtilts. The number of downtilts is mapped to the number of groups of subframes. In the present embodiment, two groups of subframes are used, even or odd numbered subframes. In a downlink direction, for each subframe within a group, the same downtilt is applied. In the embodiment, LTE-A subframes are transmitted with alternating downtilts, odd subframes with the first downtilt value, even subframes with the second possible downtilt value. The terminals 20a receive the common pilots that are transmitted by the base station 100 in a per se known manner and measure the CQI and PMI on a per subframe basis. Together with the feedback information (CQI, PMI), the terminal 20a feeds back whether the measurement is based on an even or an odd subframe. In this specific case only 1 additional bit of feedback would be needed. With 2 bits of feedback four different downtilts could be handled. The number of different groups of subframes should be defined and configured in advance.

According to a further embodiment, if e.g. an individual subframe number is reported back explicitely together with the measurement feedback to the base station 100, no specific mapping or sequence of downtilts needs to be applied. For each reporting, the eNB 100 knows the used downtilt, because it has been notified correspondingly by the terminal 20a.

According to a further embodiment, in the downlink direction, a "downtilt control" information is inserted in each subframe, which identifies the currently used downtilt. The terminal 20a measures the PMI and/or CQI based on a subframe and feeds back these reports together with the control information received in DL within the measurement subframe. Due to this, no additional knowledge on the used downtilt is required on terminal side.

According to a further embodiment, to each downtilt angle available at the eNB 100, a specific part of the frequency band that may be used for data transmission is assigned. The PMI and CQI measurements of the terminal 20a are performed per frequency subband (measurements down to a width of 6 PRBs (physical resource block) are possible in a 10-MHz LTE system). The reporting is fed back per frequency subband. In this way, the relation of the measurement with the currently used downtilt can be derived by the eNB 100 without specific knowledge at the terminal 20a.

As already explained above, the different tilt angles ("downtilts,") can be realized in different ways, e.g.:
- using an antenna or antenna system 110 with electronic downtilt control.
- using multiple antennas 110a, 110b per eNB 100, each having a different downtilt θa, θb. Each subframe transmission is switched to the appropriate antenna.
- use of multiple antennas 110a, 110b with different downtilt θa, θb in combination with additional baseband units (e.g., one baseband unit per antenna). This would also allow allocation of subbands with different downtilt within the same subframe.

Preferably, a synchronized uplink (UL) operation (DL/UL frames starting at the same time) is performed.

The inventive principle employed by the embodiments advantageously enables to reduce inter-cell interference and therefore increase the spectral efficiency.

The proposed solution allows deployment of terminal (i.e., UE-) specific downtilt angles right now by providing a solution feasible with available antennas having fixed tilt angles. Any possibly required additional information on timing relation to be provided by the terminals 20a is not specific to the embodiments, but also helpful and necessary for currently discussed proposals on coordinated scheduling and for joint processing techniques.

The inventive principle enables the deployment of advanced inter-cell interference reduction methods already with relatively simple antenna hardware.

The embodiments explained above are not limited to base stations 100 of cellular communications networks. The inventive principle of assigning different tilt angles to different transmission resources may rather be applied to any base station having at least one antenna system 110 a tilt angle of which (or a tilt angle of a main lobe of a corresponding beam pattern) may be controlled, e.g. electronically or on an electromechanical basis or by switching between different antennas 110a, 110b having fixed tilt angles. Typically, the principle may be applied with GSM-, UMTS-, LTE-, and WiMAX- base stations, as well as with base stations operating according to other existing or future standards.

Advantageously, the application of the inventive principle reduces an effort required for network planning and increases network robustness. Moreover, since the base station 100 or its processing means 120 can apply the inventive principle, a decentralized adaptation of the radio access network to changing environments and operating conditions is enabled.

The further degrees of freedom gained by the application of the inventive principle may advantageously be employed to improve existing scheduling techniques, e.g. with regard to fairness or spectral efficiency and the like.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. Method of operating a base station (100) for a cellular communications network, wherein said base station (100) comprises at least one antenna system (110), a beam pattern of which is controlled at least regarding a tilt angle (θ), wherein at least one radio resource used for data transmission to and/or from at least one terminal (20a) is associated with a specific value for the tilt angle (θ), wherein the assignment of radio resources and/or terminals (20a) associated with said radio resources to specific values for the tilt angle (θ) is performed depending on feedback information provided by said terminal (20a), wherein said feedback information comprises at least information associating a quality of transmission between said base station (100) and said mobile terminal (20a) with a specific tilt angle value used for said transmission.

2. Method according to claim 1, wherein specific subframes are assigned to different values of the tilt angle (θ).

3. Method according to one of the preceding claims, wherein specific frequency bands and/or carrier frequencies are assigned to different values of the tilt angle (θ).

4. Method according to one of the preceding claims, wherein the assignment of radio resources and/or terminals (20a) associated with said radio resources to specific values for the tilt angle (θ) is performed depending on at least one of: a specific rule, feedback information provided by said terminal (20a), a distance between the base station (100) and a terminal (20a), scheduling information of neighbouring base stations.

5. Method according to claim 4, wherein said feedback information comprises at least one of: information characterizing a quality of transmission between said base station (100) and said mobile terminal (20a), information associating a quality of transmission between said base station (100) and said mobile terminal (20a) with a specific tilt angle value used for said transmission.

6. Method according to one of the preceding claims, wherein the base station (100) transmits information indicative of a selected tilt angle to said terminal (20a).

7. Method according to one of the preceding claims, wherein a specific value for said tilt angle (θ) is set by: electronically controlling the beam pattern of said antenna system (110).

8. Method according to one of the preceding claims, wherein a specific value for said tilt angle (θ) is set by: providing different antennas (110a, 110b) each of which has a specific tilt angle (θa, θb), selecting one of said different antennas (110a, 110b) depending on a desired tilt angle to be set, and transmitting data via said selected antenna.

9. Base station (100) for a cellular communications network, wherein said base station (100) comprises at least one antenna system (110), a beam pattern of which can be controlled at least regarding a tilt angle (θ), wherein said base station (100) is configured to associate at least one radio resource used for data transmission to and/or from at least one terminal (20a) with a specific value for the tilt angle (θ), wherein said base station (100) is configured to perform the assignment of radio resources and/or terminals (20a) associated with said radio resources to specific values for the tilt angle (θ) depending on feedback information provided by said terminal (20a), wherein said feedback information comprises at least information associating a quality of transmission between said base station (100) and said mobile terminal (20a) with a specific tilt angle value used for said transmission.

10. Base station (100) according to claim 9, wherein said base station (100) is configured to assign specific subframes to different values of the tilt angle (θ).

11. Base station (100) according to one of the claims 9 to 10, wherein said base station (100) is configured to assign specific frequency bands and/or carrier frequencies to different values of the tilt angle (θ).

12. Base station (100) according to one of the claims 9 to 11, wherein said base station (100) is configured to perform the assignment of radio resources and/or terminals (20a) associated with said radio resources to specific values for the tilt angle (θ) depending on at least one of: a specific rule, feedback information provided by said terminal (20a), a distance between the base station (100) and a terminal (20a), scheduling information of neighbouring base stations.

13. Base station (100) according to one of the claims 9 to 12, wherein said feedback information comprises at least one of: information characterizing a quality of transmission between said base station (100) and said mobile terminal (20a), information associating a quality of transmission between said base station (100) and said mobile terminal (20a) with a specific tilt angle value used for said transmission.

14. Base station (100) according to one of the claims 9 to 13, wherein said base station (100) is configured to transmit information indicative of a selected tilt angle to said terminal (20a).

15. Base station (100) according to one of the claims 9 to 14, wherein said base station (100) is configured to set a specific value for said tilt angle (θ) by: electronically controlling the beam pattern of said antenna system (110).

16. Base station (100) according to one of the claims 9 to 15, wherein said base station (100) is configured to set a specific value for said tilt angle (θ) by: providing different antennas (110a, 110b) each of which has a specific tilt angle (θa, θb), selecting one of said different antennas (110a, 110b) depending on a desired tilt angle to be set, and transmitting data via said selected antenna.

## Patentansprüche

1. Verfahren zum Betreiben einer Basisstation (100) für ein zellulares Kommunikationsnetzwerk, wobei die besagte Basisstation (100) mindestens ein Antennensystem (100), dessen Strahlmuster zumindest in Bezug auf einen Kippwinkel (θ) gesteuert wird, wobei mindestens eine für die Datenübertragung an mindestens ein und/oder von mindestens einem Endgerät (20a) benutzte Funkressource mit einem spezifischen Wert für den Kippwinkel (θ) assoziiert ist, wobei das Zuordnen von Funkressourcen und/oder mit den besagten Funkressourcen assoziierten Endgeräten (20a) zu spezifischen Werten für den Kippwinkel (θ) in Abhängigkeit von von dem besagten Endgerät (20a) bereitgestellten Rückkopplungsinformationen erfolgt, wobei die besagten Rückkopplungsinformationen zumindest Informationen, welche eine Übertragungsqualität zwischen der besagten Basisstation (100) und dem besagten mobilen Endgerät (20a) mit einem für die besagte Übertragung benutzten spezifischen Kippwinkelwert assoziieren, umfassen.

2. Verfahren nach Anspruch 1, wobei spezifische Teilrahmen unterschiedlichen Werten des Kippwinkels (θ) zugeordnet werden.

3. Verfahren nach einem der vorstehenden Ansprüche, wobei spezifische Frequenzbänder und/oder Trägerfrequenzen unterschiedlichen Werten des Kippwinkels (θ) zugeordnet werden.

4. Verfahren nach einem der vorstehenden Ansprüche, wobei das Zuordnen von Funkressourcen und/oder mit den besagten Funkressourcen assoziierten Endgeräten (20a) zu spezifischen Werten für den Kippwinkel (θ) in Abhängigkeit von mindestens einem der folgenden durchgeführt wird: eine spezifische Regel, von dem besagten Endgerät (20a) bereitgestellte Rückkopplungsinformationen, eine Entfernung zwischen der Basisstation (100) und einem Endgerät (20a), Planungsinformationen von benachbarten Basisstationen.

5. Verfahren nach Anspruch 4, wobei die besagten Rückkopplungsinformationen mindestens eine der folgenden umfassen: Informationen, welche eine Übertragungsqualität zwischen der besagten Basisstation (100) und dem besagten mobilen Endgerät (20a) kennzeichnen, Informationen, welche eine Übertragungsqualität zwischen der besagten Basisstation (100) und dem besagten mobilen Endgerät (20a) mit einem für die besagte Übertragung benutzten spezifischen Kippwinkelwert assoziieren.

6. Verfahren nach einem der vorstehenden Ansprüche, wobei die Basisstation (100) Informationen, welche für einen ausgewählten Kippwinkel indikativ sind, an das besagte Endgerät (20a) überträgt.

7. Verfahren nach einem der vorstehenden Ansprüche, wobei ein spezifischer Wert für den besagten Kippwinkel (θ) wie folgt festgelegt wird: elektronische Steuerung des Strahlmusters des besagten Antennensystems (110).

8. Verfahren nach einem der vorstehenden Ansprüche, wobei ein spezifischer Wert für den besagten Kippwinkel (θ) wie folgt festgelegt wird: Bereitstellen von unterschiedlichen Antennen (110a, 110b), von denen eine jede einen spezifischen Kippwinkel (θa, θb) aufweist, Auswählen einer der besagten unterschiedlichen Antennen (110a, 110b) in Abhängigkeit von einem gewünschten festzulegenden Kippwinkel, und Übertragen von Daten über die besagte ausgewählte Antenne.

9. Basisstation (100) für ein zellulares Kommunikationsnetzwerk, wobei die besagte Basisstation (100) mindestens ein Antennensystem (100), dessen Strahlmuster zumindest in Bezug auf einen Kippwinkel (θ) gesteuert werden kann, wobei die besagte Basisstation (110) dafür konfiguriert ist, mindestens eine für die Datenübertragung an mindestens ein und/oder von mindestens einem Endgerät (20a) benutzte Funkressource mit einem spezifischen Wert für den Kippwinkel (θ) zu assoziieren, wobei die besagte Basisstation (100) dafür konfiguriert ist, das Zuordnen von Funkressourcen und/oder mit den besagten Funkressourcen assoziierten Endgeräten (20a) zu spezifischen Werten für den Kippwinkel (θ) in Abhängigkeit von von dem besagten Endgerät (20a) bereitgestellten Rückkopplungsinformationen durchzuführen, wobei die besagten Rückkopplungsinformationen zumindest Informationen, welche eine Übertragungsqualität zwischen der besagten Basisstation (100) und dem besagten mobilen Endgerät (20a) mit einem für die besagte Übertragung benutzten spezifischen Kippwinkelwert assoziieren, umfassen.

10. Basisstation (100) nach Anspruch 9, wobei die besagte Basisstation (100) dafür konfiguriert ist, spezifische Teilrahmen unterschiedlichen Werten des Kippwinkels (8) zuzuordnen.

11. Basisstation (100) nach einem der Ansprüche 9 bis 10, wobei die besagte Basisstation (100) dafür konfiguriert ist, spezifische Frequenzbänder und/oder Trägerfrequenzen unterschiedlichen Werten des Kippwinkels (θ) zuzuordnen.

12. Basisstationen (100) nach einem der Ansprüche 9 bis 11, wobei die besagte Basisstation (100) dafür konfiguriert ist, das Zuordnen von Funkressourcen und/oder mit den besagten Funkressourcen assoziierten Endgeräten (20a) zu spezifischen Werten für den Kippwinkel (8) in Abhängigkeit von mindestens einem der folgenden durchzuführen: eine spezifische Regel, von dem besagten Endgerät (20a) bereitgestellte Rückkopplungsinformationen, eine Entfernung zwischen der Basisstation (100) und einem Endgerät (20a), Planungsinformationen von benachbarten Basisstationen.

13. Basisstation (100) nach einem der Ansprüche 9 bis 12, wobei die besagten Rückkopplungsinformationen mindestens eine der folgenden umfassen: Informationen, welche eine Übertragungsqualität zwischen der besagten Basisstation (100) und dem besagten mobilen Endgerät (20a) kennzeichnen, Informationen, welche eine Übertragungsqualität zwischen der besagten Basisstation (100) und dem besagten mobilen Endgerät (20a) mit einem für die besagte Übertragung benutzten spezifischen Kippwinkelwert assoziieren.

14. Basisstation (100) nach einem der Ansprüche 9 bis 13, wobei die besagte Basisstation (100) dafür konfiguriert ist, Informationen, welche für einen ausgewählten Kippwinkel indikativ sind, an das besagte Endgerät (20a) zu übertragen.

15. Basisstation (100) nach einem der Ansprüche 9 bis 14, wobei die besagte Basisstation (100) dafür konfiguriert ist, einen spezifischen Wert für den besagten Kippwinkel (θ) wie folgt festzulegen: elektronische Steuerung des Strahlmusters des besagten Antennensystems (110).

16. Basisstation (100) nach einem der Ansprüche 9 bis 15, wobei die besagte Basisstation (100) dafür konfiguriert ist, einen spezifischen Wert für den besagten Kippwinkel (θ) wie folgt festzulegen: Bereitstellen von unterschiedlichen Antennen (110a, 110b), von denen eine jede einen spezifischen Kippwinkel (θa, θb) aufweist, Auswählen einer der besagten unterschiedlichen Antennen (110a, 110b) in Abhängigkeit von einem gewünschten festzulegenden Kippwinkel, und Übertragen von Daten über die besagte ausgewählte Antenne.

## Revendications

1. Procédé de fonctionnement d'une station de base (100) pour un réseau de communication cellulaire, dans lequel ladite station de base (100) comprend au moins un système d'antennes (110), dont un motif de faisceau est contrôlé au moins en ce qui concerne l'angle d'inclinaison (θ), dans lequel au moins une ressource radio utilisée pour la transmission de données vers et/ou depuis au moins un terminal (20a) est associée à une valeur spécifique de l'angle d'inclinaison (θ), dans lequel l'attribution de ressources radio et/ou de terminaux (20a), associés auxdites ressources radio, à des valeurs spécifiques de l'angle d'inclinaison (θ) est effectuée en fonction d'informations de rétroaction fournies par ledit terminal (20a), dans lequel lesdites informations de rétroaction comprennent au moins des informations associant une qualité de transmission entre ladite station de base (100) et ledit terminal mobile (20a) à une valeur d'angle d'inclinaison spécifique utilisée pour ladite transmission.

2. Procédé selon la revendication 1, dans lequel des sous-trames spécifiques sont attribuées à différentes valeurs de l'angle d'inclinaison (θ).

3. Procédé selon l'une des revendications précédentes, dans lequel des bandes de fréquences spécifiques et/ou des fréquences porteuses sont attribuées à différentes valeurs de l'angle d'inclinaison (θ).

4. Procédé selon l'une des revendications précédentes, dans lequel l'attribution de ressources radio et/ou de terminaux (20a), associés auxdites ressources radio, à des valeurs spécifiques de l'angle d'inclinaison (θ) est effectuée en fonction d'au moins un des éléments suivants : une règle spécifique, des informations de rétroaction fournies par ledit terminal (20a), une distance entre la station de base (100) et un terminal (20a), des informations de planification de stations de base voisines.

5. Procédé selon la revendication 4, dans lequel lesdites informations de rétroaction comprennent au moins un des deux types d'informations suivants : des informations caractérisant une qualité de transmission entre ladite station de base (100) et ledit terminal mobile (20a), des informations associant une qualité de transmission entre ladite station de base (100) et ledit terminal mobile (20a) à une valeur d'angle d'inclinaison spécifique utilisée pour ladite transmission.

6. Procédé selon l'une des revendications précédentes, dans lequel la station de base (100) transmet des informations indiquant un angle d'inclinaison sélectionné audit terminal (20a).

7. Procédé selon l'une des revendications précédentes, dans lequel une valeur spécifique dudit angle d'inclinaison (θ) est réglée comme suit :
contrôler électroniquement le motif de faisceau dudit système d'antennes (110).

8. Procédé selon l'une des revendications précédentes, dans lequel une valeur spécifique dudit angle d'inclinaison (θ) est réglée comme suit :
fournir différentes antennes (110a, 110b) chacune ayant un angle d'inclinaison spécifique (θa, θb), sélectionner une desdites différentes antennes (110a, 110b) en fonction d'un angle d'inclinaison souhaité à régler, et transmettre des données par l'intermédiaire de ladite antenne sélectionnée.

9. Station de base (100) pour un réseau de communication cellulaire, ladite station de base (100) comprenant au moins un système d'antennes (110), dont un motif de faisceau peut être contrôlé au moins en ce qui concerne un angle d'inclinaison (θ), ladite station de base (100) étant configurée pour associer au moins une ressource radio utilisée pour la transmission de données vers et/ou depuis au moins un terminal (20a) à une valeur spécifique de l'angle d'inclinaison (θ), ladite station de base (100) étant configurée pour effectuer l'attribution de ressources radio et/ou de terminaux (20a), associés auxdites ressources radio, à des valeurs spécifiques de l'angle d'inclinaison (θ) en fonction d'informations de rétroaction fournies par ledit terminal (20a), dans laquelle lesdites informations de rétroaction comprennent au moins des informations associant une qualité de transmission entre ladite station de base (100) et ledit terminal mobile (20a) à une valeur d'angle d'inclinaison spécifique utilisée pour ladite transmission.

10. Station de base (100) selon la revendication 9, ladite station de base (100) étant configurée pour attribuer des sous-trames spécifiques à différentes valeurs de l'angle d'inclinaison (θ).

11. Station de base (100) selon l'une des revendications 9 et 10, ladite station de base (100) étant configurée pour attribuer des bandes de fréquences spécifiques et/ou des fréquences porteuses à différentes valeurs de l'angle d'inclinaison (θ).

12. Station de base (100) selon l'une des revendications 9 à 11, ladite station de base (100) étant configurée pour effectuer l'attribution de ressources radio et/ou de terminaux (20a), associés auxdites ressources radio, à des valeurs spécifiques de l'angle d'inclinaison (θ) en fonction d'au moins un des éléments suivants : une règle spécifique, des informations de rétroaction fournies par ledit terminal (20a), une distance entre la station de base (100) et un terminal (20a), des informations de planification de stations de base voisines.

13. Station de base (100) selon l'une des revendications 9 à 12, dans laquelle lesdites informations de rétroaction comprennent au moins un des deux types d'informations suivants : des informations caractérisant une qualité de transmission entre ladite station de base (100) et ledit terminal mobile (20a), des informations associant une qualité de transmission entre ladite station de base (100) et ledit terminal mobile (20a) à une valeur d'angle d'inclinaison spécifique utilisée pour ladite transmission.

14. Station de base (100) selon l'une des revendications 9 à 13, ladite station de base (100) étant configurée pour transmettre des informations indiquant un angle d'inclinaison sélectionné audit terminal (20a).

15. Station de base (100) selon l'une des revendications 9 à 14, dans laquelle ladite station de base (100) est configurée pour régler une valeur spécifique dudit angle d'inclinaison (θ) comme suit :
contrôler électroniquement le motif de faisceau dudit système d'antennes (110).

16. Station de base (100) selon l'une des revendications 9 à 15, ladite station de base (100) étant configurée pour régler une valeur spécifique dudit angle d'inclinaison (θ) comme suit: fournir différentes antennes (110a, 110b) chacune ayant un angle d'inclinaison spécifique (θa, θb), sélectionner une desdites différentes antennes (110a, 110b) en fonction d'un angle d'inclinaison souhaité à régler, et transmettre des données par l'intermédiaire de ladite antenne sélectionnée.
